# EUROPEAN PATENT APPLICATION

(11) **EP 4 769 777 A1**
(43) Date of publication of application: **01.07.2026**
(21) Application number: 25851853.9
(22) Date of filing: 18.07.2025
(51) Int. Cl.: H01M 50/383, H01M 50/204, H01M 50/249, B60L 50/64, B60K 1/04

(54) **BATTERY PACK AND VEHICLE INCLUDING SAME**

(30) Priority: 08.08.2024 KR 20240106266
(71) Applicant: LG Energy Solution, Ltd., Seoul 07335 (KR)
(72) Inventor: LEE, Joo-Hyoung, Daejeon 34122 (KR); JUNG, Hye-Mi, Daejeon 34122 (KR)
(74) Representative: Plasseraud IP
(86) International application number: PCT/KR2025/010636
(87) International publication number: WO 2026/034849

(57) **Abstract**

The present disclosure relates to a battery pack that includes: a plurality of battery cells; and a pack case configured to accommodate the plurality of battery cells, and having a venting unit configured to discharge gases generated from the battery cell to the outside, and a blocking portion protruding inward from an inner surface thereof so as to prevent sparks discharged from the battery cell from moving toward the venting unit.

## Description

### TECHNICAL FIELD

The present disclosure relates to a battery pack and a vehicle including the same.

This application is based on and claims priority from Korean Patent Application No. 10-2024-0106266, filed on August 08, 2024, with the Korean Intellectual Property Office, the disclosure of which is incorporated herein in its entirety by reference.

### BACKGROUND ART

Secondary batteries, which offer high applicability across product categories and possess electrical characteristics such as high energy density, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

A common method for configuring a battery pack by connecting multiple battery cells in series/parallel is performed by preferentially configuring a battery module including at least one battery cell and then by adding other components to at least one battery module to configure a battery pack or battery rack. Recently, cell-to-pack-type battery packs in which multiple battery cells are directly stored in a pack housing or the like, instead of being modularized, have been manufactured.

When a thermal event, such as thermal runaway, occurs within a battery pack, gases may be emitted from the battery cells contained therein, and the gases may contain flames. In addition, when gases are emitted from the battery cell, electrode plate particles or active material particles may be heated to high temperatures within the battery cell and emitted to the outside. These high-temperature particles may appear in the form of sparks.

In conventional battery packs, when an abnormality occurs in a specific battery cell or battery module, high-temperature gases are often vented through a venting unit provided in the pack case. In this case, if sparks are exposed to the outside of the pack case along with the gases, they may react with oxygen outside the battery pack, potentially generating flames or developing fires. In addition, when a flame or fire occurs outside a specific battery pack, it may spread to adjacent battery packs or to a device equipped with the battery pack, potentially causing a more serious problem.

Therefore, there is a growing need for technology capable of preventing sparks or flames from being released through the venting unit to the outside of the battery pack, thereby suppressing the occurrence or spread of flames or fires outside the battery pack.

### DISCLOSURE

### Technical Problem

The present disclosure is designed to solve the problems of the related art, and therefore the present disclosure is directed to providing a battery pack capable of ensuring safety and reliability in the event of an abnormality in a battery cell or battery module, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery pack including: a plurality of battery cells; and a pack case that is configured to accommodate the plurality of battery cells, and has a venting unit configured to discharge gases generated from the battery cell to an outside, and a blocking portion protruding inward from an inner surface thereof so as to prevent sparks discharged from the battery cell from moving toward the venting unit.

The blocking portion may be provided between the plurality of battery cells and the venting unit.

The pack case may include a base frame on which the plurality of battery cells are seated, and a side frame extending upward from the base frame and having the venting unit provided thereon, and the blocking portion may be configured to face the side frame on which the venting unit is provided.

The pack case may include a pack lid configured to cover the top of the plurality of battery cells, and having the blocking portion formed on an inner surface thereof.

The battery pack may further include a module case configured to accommodate the plurality of battery cells in an inner space, and having a venting hole formed on an upper surface to communicate with the inner space.

The blocking portion may be configured to cover an upper portion of the venting unit.

The blocking portion may be configured to extend in one direction.

A plurality of blocking portions may be arranged to be spaced apart from each other in one direction.

The blocking portion may include a main cover configured to face the venting unit.

The blocking portion may include a lower cover configured to be bent from a lower end of the main cover in a direction away from the venting unit.

The lower cover may be configured to be inclined downward.

The blocking portion may include a side cover configured to be bent from both ends of the main cover in a direction away from the venting unit.

The blocking portion may include a protrusion configured such that at least a portion of the main cover protrudes in a direction away from the venting unit.

The blocking portion may have a plurality of through-holes formed by perforating at least a portion of the main cover.

In another aspect of the present disclosure, there is provided a vehicle including a battery pack according to the present disclosure.

### Advantageous Effects

According to one aspect of the present disclosure, sparks generated in the event of an abnormality in a battery cell can be prevented from being released outside the pack case, thereby ensuring safety and reliability.

In addition, according to another aspect of the present disclosure, it becomes possible to effectively prevent thermal propagation between the battery packs by suppressing flame development outside the battery pack.

This can prevent or delay events due to thermal runaway, such as fires or explosions, in the battery packs including multiple battery modules or in devices equipped with them.

In particular, in electric vehicles, it becomes possible to secure sufficient time for occupants to escape or continue driving by suppressing or delaying the propagation of thermal runaway between the battery cells or battery modules.

Furthermore, according to another aspect of the present disclosure, venting gas generated in the event of an abnormal situation in a battery cell can be smoothly discharged to the outside of the pack case.

Furthermore, according to another aspect of the present disclosure, in the event of an abnormal situation in a specific battery cell or battery module within a single battery pack, high-temperature gas generated from the battery cell can be rapidly discharged to the outside of the pack case. Therefore, it becomes possible to minimize thermal damage to other battery cells or battery modules, thereby preventing additional chain reactions of ignition.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is an overall perspective view of a battery pack according to an embodiment of the present disclosure.
FIG. 2 is an exploded perspective view of a battery pack according to an embodiment of the present disclosure.
FIG. 3 is a cross-sectional view taken along line I - I' in FIG. 1, which illustrates a direction in which sparks are emitted within a battery pack according to an embodiment of the present disclosure.
FIG. 4 is a drawing in which a pack lid including a blocking portion is separated in a battery pack according to an embodiment of the present disclosure.
FIG. 5 is a cross-sectional view of a battery pack to which a blocking portion is applied according to another embodiment of the present disclosure.
FIG. 6 is a front view of a blocking portion included in a battery pack according to another embodiment of the present disclosure.
FIG. 7 is a bottom perspective view of a pack lid including a blocking portion in a battery pack according to an embodiment of the present disclosure.
FIG. 8 is a drawing illustrating a blocking portion included in a battery pack according to another embodiment of the present disclosure.
FIG. 9 is a drawing illustrating a blocking portion included in a battery pack according to another embodiment of the present disclosure.
FIG. 10 is a drawing illustrating a blocking portion included in a battery pack according to another embodiment of the present disclosure.
FIG. 11 is a drawing illustrating a blocking portion included in a battery pack according to another embodiment of the present disclosure.
FIG. 12 is a drawing illustrating a blocking portion included in a battery pack according to another embodiment of the present disclosure.
FIG. 13 is a schematic perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

For example, in the embodiment of the present disclosure, the X-axis direction shown in the drawing may indicate a left-right direction, the Y-axis direction may indicate a front-back direction perpendicular to the X-axis direction on the horizontal plane (X-Y plane), and the Z-axis direction may indicate an up-down direction (vertical direction) perpendicular to both the X-axis direction and the Y-axis direction.

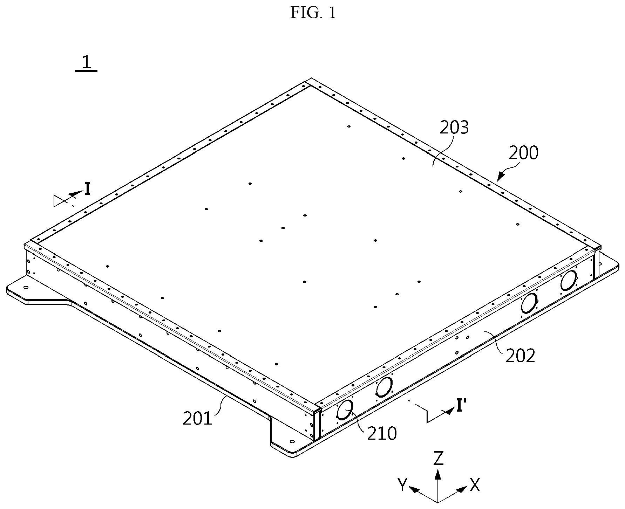

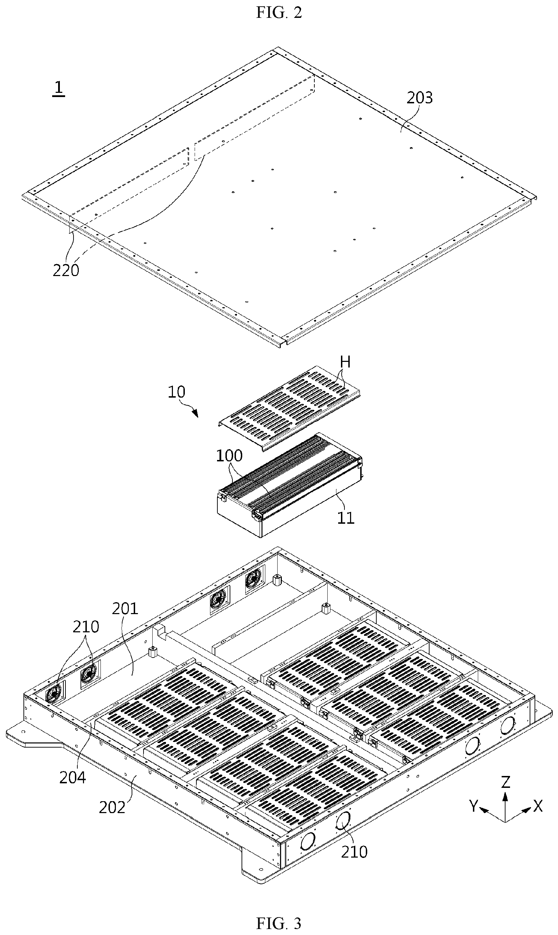

FIG. 1 is an overall perspective view of a battery pack according to an embodiment of the present disclosure, and FIG. 2 is an exploded perspective view of a battery pack according to an embodiment of the present disclosure. In addition, FIG. 3 is a cross-sectional view taken along line I - I' in FIG. 1, which illustrates a direction in which sparks are emitted within a battery pack according to an embodiment of the present disclosure.

Referring to FIGS. 1 through 3, a battery pack 1 according to an embodiment of the present disclosure includes a battery cell 100 and a pack case 200.

Referring to FIG. 2, a plurality of battery cells 100 may be included. In addition, although not shown in the drawings, the plurality of battery cells 100 may include an electrode assembly, a cell case that accommodates the electrode assembly, and electrode leads connected to the electrode assembly and extending outside the cell case to function as electrode terminals. In this case, the plurality of battery cells 100 may be electrically connected to each other.

The battery cell 100 may be a pouch-type secondary battery. The cell case of such a pouch-type secondary battery may be configured as a pouch in which a metal layer made of aluminum is interposed between polymer layers.

As illustrated in FIG. 2, the plurality of battery cells 100 may be disposed side by side in the front-back direction (Y-axis direction) while standing in the vertical direction (Z-axis direction). In this case, each battery cell 100 may have a sealing portion facing left-right direction (X-axis direction) and upward direction (+Z-axis direction), and a storage portion facing the front-back direction (Y-axis direction).

The present disclosure is not limited to a specific type or shape of the battery cell 100, and various battery cells 100 known at the time of filing the present disclosure may be applied to configure the battery pack 1 of the present disclosure. In the present embodiment, although a pouch-type secondary battery with high energy density and easy stacking will be described as shown in the drawing, it is obvious that a cylindrical or prismatic secondary battery may also be applied to the battery cell 100.

The pack case 200 may be configured to accommodate the plurality of battery cells 100. That is, the pack case 200 may provide an accommodation space to accommodate the plurality of battery cells 100. The pack case 200 may be made of or include a material that ensures mechanical strength, such as metal, for example, steel or SUS, or plastic, to safely protect the battery cells 100 accommodated therein.

In addition, the pack case 200 may include a venting unit 210. The venting unit 210 may be configured to discharge gas generated from the battery cells 100 accommodated therein to the outside of the pack case 200. The venting unit 210 may be provided in the form of a hole extending from the inside to the outside of the pack case 200.

Alternatively, the venting unit 210 may be configured as a venting device that is mountable in the hole of the pack case 200 and operates when venting gas is generated within the pack case 200.

For example, the venting unit 210 may include a venting valve or be implemented as such a venting valve. In this case, a mounting hole may be formed in a side frame 202 so that the venting unit 210 may be mounted in the mounting hole. In the case where the venting unit 210 includes a venting valve or is implemented as such a venting valve, the venting valve may be configured to open when the internal pressure of the pack case 200 increases, thereby discharging venting gas to the outside of the pack case 200.

Meanwhile, the pack case 200 may include a blocking portion 220. The blocking portion 220 may be configured to suppress sparks emitted from the battery cell 100 from moving toward the venting unit 210. The blocking portion 220 may be provided on a path from the battery cell 100 to the venting unit 210. The blocking portion 220 may be configured to completely block sparks from passing through it.

The blocking portion 220 may be provided inside the pack case 200. The blocking portion 220 may be configured to protrude inward from the inner surface of the pack case 200. The blocking portion 220 may be provided as a separate member from the pack case 200. In this case, the blocking portion 220 may be coupled to the pack case 200 by bolting, welding, adhesive, or the like. Alternatively, the blocking portion 220 may be configured to be integrated with the pack case 200.

The blocking portion 220 may be made of a material having low thermal conductivity and excellent heat and/or fire resistant properties. For example, the blocking portion 220 may be made of a flame-retardant mica material. Alternatively, the blocking portion 220 may be made of a metal material having rigidity and heat resistance. The blocking portion 220 may be made of the same material as the pack case 200. The blocking portion 220 may be coated with a heat-resistant and/or fire-resistant material.

Sparks or flames having a strong tendency to move straight may be emitted from the battery cell 100, collide with the internal structure of the pack case 200, and move to the venting unit 210. However, according to the embodiment of the present disclosure, the blocking portion 220 may prevent the sparks from being discharged to the outside of the pack case 200 through the venting unit 210. As a result, the sparks may be prevented from reacting with oxygen outside the pack case 200 and generating flames. Therefore, according to the above aspects of the present disclosure, the safety and reliability of the battery pack 1 may be ensured.

Referring to FIG. 3, the blocking portion 220 may be provided between a plurality of battery cells 100 and a venting unit 210. That is, the blocking portion 220 may be provided inside the pack case 200, particularly inward from the venting unit 210. Specifically, venting gases and/or sparks generated from the battery cells 100 may travel to the venting unit 210. That is, a venting path through which the venting gases and/or sparks flow may be formed between the plurality of battery cells 100 and the venting unit 210. In this case, the blocking portion 220 may be provided to cross the venting path. That is, the blocking portion 220 may be provided on the venting path and configured to suppress the movement of sparks or the like.

According to the above-implemented configuration of the present disclosure, sparks emitted from the battery cell 100 may be preemptively blocked before reaching the venting unit 210 of the pack case 200, thereby preventing the sparks from being discharged to the outside and more effectively suppressing flames from occurring outside the pack case 200.

Referring to FIG. 2, the pack case 200 according to an embodiment of the present disclosure may include a base frame 201 and a side frame 202.

The base frame 201 may form the lower surface of the pack case 200 and may be configured in the shape of a square plate. In addition, the base frame 201 may be configured to allow the plurality of battery cells 100 to be seated on its upper surface. In addition, the base frame 201 may have a flat upper surface to ensure stable mounting of the plurality of battery cells 100 thereon.

The side frame 202 may extend upward from respective edges of the base frame 201. The side frame 202 may have a plurality of unit walls to surround a plurality of battery cells 100. More specifically, the side frame 202 may include a rear wall located at the +Y-direction end of the base frame 201, a right wall located at the -X-direction end, a front wall located at the -Y-direction end, and a left wall located at the +X-direction end, respectively, to form the side surfaces of the pack case 200.

The venting device 210 may be provided on the side of the pack case 200, i.e., on the side frame 202. A plurality of venting units 210 may be provided. In particular, the venting device 210 may be located on at least some of the plurality of unit walls of the side frame 202. In addition, the venting device 210 may be formed on two or more unit walls, respectively, or two or more venting devices 210 may be formed on a single unit wall. For example, referring to FIG. 2, a plurality of venting devices 210 may be provided on each of the front and rear walls. In this case, the plurality of venting units 210 may be provided symmetrically with respect to the center of the side frame 202.

According to the above-described embodiment of the present disclosure, in the event of an abnormal condition in the battery cell 100, high-temperature gas or the like may be discharged in both directions of the pack case 200, facilitating the rapid discharge of gas to the outside of the pack case 200.

Meanwhile, the number and locations of the venting units 210 described with reference to the embodiment in FIG. 2 are merely examples, and may be changed to various other numbers or locations.

The blocking portion 220 may be configured to face the side frame 202 on which the venting unit 210 is formed. In this case, at least a portion of the blocking portion 220 may be provided to be spaced apart from the side frame 202 by a predetermined distance.

In this case, the distance between the blocking portion 220 and the side frame 202 is not limited as long as it is located on the venting path from the battery cell 100 toward the venting unit 210.

According to the above-described embodiment of the present disclosure, venting gas may move through the gap between the blocking portion 220 and the side frame 202 and then be smoothly discharged to the outside through the venting unit 210.

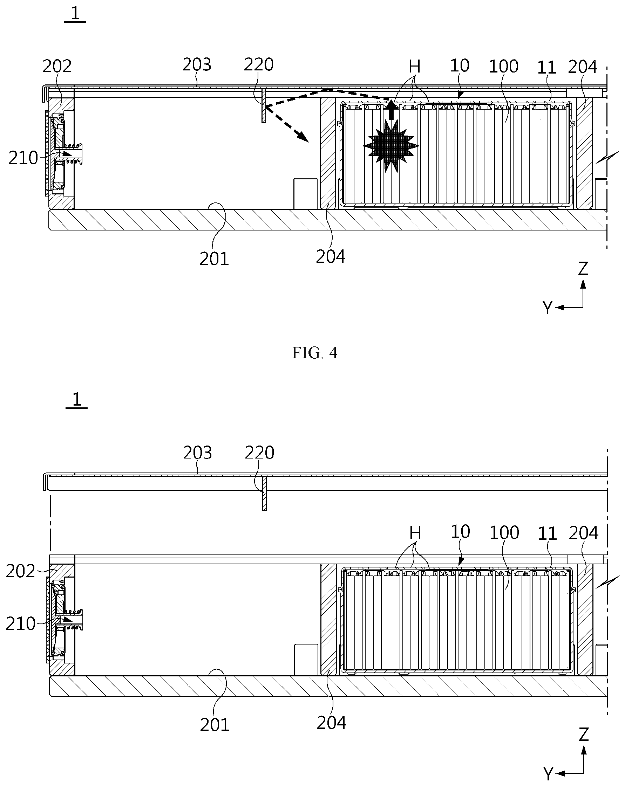

FIG. 4 is a drawing in which a pack lid including a blocking portion is separated in a battery pack according to an embodiment of the present disclosure.

Referring to FIG. 4, the pack case 200 may further include a pack lid 203. The pack lid 203 may be configured to cover the top of the plurality of battery cells 100. The pack lid 203 may be provided to be coupled to the upper portion of the side frame 202 to form the upper surface of the pack case 200.

The pack lid 203 may protect components stored inside, such as the battery cells 100, and prevent venting gases and/or sparks emitted from the battery cell 100 from being discharged to the outside, particularly to the upper portion of the pack case 200. In particular, the pack lid 203 may guide venting gases and sparks toward the venting unit 210 in the inner space of the pack case 200.

The blocking portion 220 may be provided further upward than the venting unit 210. For example, as disclosed in the embodiment illustrated in FIG. 4, the blocking portion 220 may be provided on the pack lid 203. In particular, the blocking portion 220 may be configured to be coupled to the lower surface of the pack lid 203. In this case, the blocking portion 220 may be bolted and fixed to the pack lid 203. Alternatively, the blocking portion 220 may be manufactured to be integrated with the pack lid 203.

The high-temperature venting gas may move along the inner surface of the pack lid 203 toward the venting unit 210, and then be discharged to the outside. In this case, as shown in the above-implemented configuration, when the blocking portion 220 is positioned further upward than the venting unit 210, the flow direction of the venting gas may be bent by the blocking portion 220 before being discharged to the venting unit 210. In addition, during this process, sparks and the like directed toward the venting unit 210 along with the venting gas may be suppressed from being discharged to the outside by the blocking portion 220.

In addition, according to the above-implemented configuration of the present disclosure, since the blocking portion 220 is pre-coupled to the pack lid 203 during the manufacturing process, when the pack lid 203 is assembled to the side frame 202, the blocking portion 220 may be automatically installed between the battery cells 100 and the venting unit 210. As a result, the process of separately joining the blocking portion 220 to the side frame 202 may be omitted. Therefore, time and cost in manufacturing the battery pack 1 may be reduced, thereby improving productivity.

Meanwhile, referring to FIGS. 2 and 4, the pack case 200 may further include a cross-beam 204. The cross-beam 204 may be provided to partition the plurality of battery cells 100. For example, the cross-beam 204 may be configured in the form of a partition extending in the left-right direction, and may be interposed between the battery cells 100 arranged adjacently in the front-back direction. In addition, the cross-beam 204 may be configured in the form of a partition extending in the front-back direction, and may be interposed between the battery cells 100 arranged adjacently in the left-right direction.

The cross-beam 204 may be provided between the plurality of battery cells 100 and the side frame 202 equipped with the venting unit 210. In this case, the blocking portion 220 may be provided between the cross-beam 204 and the side frame 202 equipped with the venting unit 210. That is, the blocking portion 220 may be provided between the cross-beam 204 and the venting unit 210.

In addition, the cross-beam 204 may be provided to be spaced apart from the pack lid 203 by a predetermined distance. That is, the cross-beam 204 may be configured such that at least a portion of its upper end is spaced apart from the lower surface of the pack lid 203, without contacting the same, by a predetermined distance.

According to this configuration, heat or flames may be prevented from directly moving between the battery cells 100 whose storage spaces are separated by the cross-beam 204. In addition, with the above configuration, since there is a space between the cross-beam 204 and the pack lid 203, gases or sparks generated from the battery cells 100 may be further guided to the upper portion in the inner space of the pack case 200.

For example, as indicated by the dotted arrow in FIG. 3, gas or sparks may move into the space between the cross-beam 204 and the pack lid 203 and be reflected by the pack lid 203, or flow along the lower surface of the pack lid 203 toward the venting unit 210, and then be reflected inward by the blocking portion 220 provided in the pack lid 203.

Referring to FIG. 2, the plurality of battery cells 100 may be modularized into one or more battery modules 10. That is, the battery pack 1 according to the present disclosure may include one or more battery modules 10. In addition, the plurality of battery cells 100 may be included as components of one or more battery modules 10. In this case, the plurality of battery cells 100 included in the battery module 10 may be electrically connected to each other.

In addition, a plurality of battery modules 10 may be provided in the pack case 200. That is, the battery pack 1 according to the present disclosure may include a plurality of battery modules 10, and the plurality of battery cells 100 included in the battery pack 1 may be divided and included within the plurality of battery modules 10.

In particular, the battery pack 1 according to the present disclosure may include a module case 11. The module case 11 may be configured to have an inner space so that at least some of the plurality of battery cells 100 may be accommodated within the inner space. In particular, the module case 11 may be included in each battery module 10, may group the plurality of battery cells 100 into a plurality of battery modules 10, and may serve as a boundary that physically confines the inner space of each battery module 10.

In addition, although not shown in the drawing, the battery module 10 may include a busbar assembly and/or a module terminal electrically connected to the plurality of battery cells 100 accommodated therein.

The battery module 10 may include a venting hole H. The venting hole H may be configured to allow gas generated from the battery cells 100 accommodated within the module case 11 to be discharged to the outside of the module case 11.

Specifically, the venting hole H may be provided in the module case 11 to enable directional venting in a specific direction. For example, as illustrated in FIGS. 2 and 3, the venting hole H may be provided at the top of the module case 11. According to the above-implemented configuration, venting gas and/or sparks may be guided to be discharged to the upper side of the battery module 10.

According to the above-implemented configuration of the present disclosure, as indicated by the dotted arrow in FIG. 3, venting gas or sparks may be guided to the upper side of the pack case 200. As a result, when venting gas or sparks move along the upper inner surface of the pack case 200 toward the venting device 210, the flow may be more reliably blocked by the blocking portion 220 provided on the pack lid 203. Therefore, the discharge of the sparks to the outside of the pack case 200 may be more effectively suppressed.

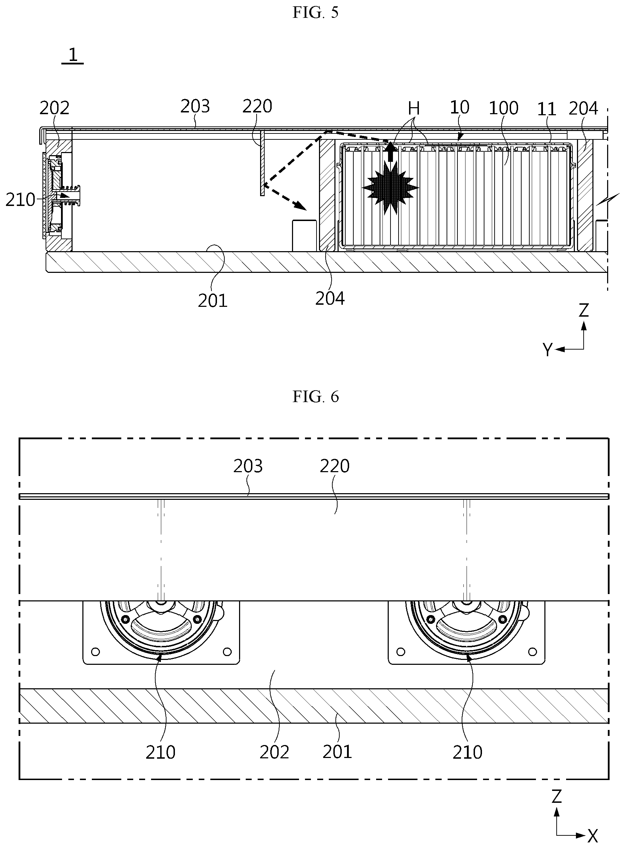

FIG. 5 is a cross-sectional view of a battery pack to which a blocking portion is applied according to another embodiment of the present disclosure, and FIG. 6 is a front view of a blocking portion included in a battery pack according to another embodiment of the present disclosure.

The blocking portion 220 may be configured to cover at least a portion of the venting unit 210. In addition, according to an embodiment of the present disclosure, the blocking portion 220 may be configured to cover a portion of the venting unit 210, as illustrated in FIG. 5 and other drawings. That is, the blocking portion 220 may be positioned inward from the venting unit 210 to cover the inner side of the venting unit 210. However, the blocking portion 220 may cover only a portion of the venting unit 210, instead of covering the entire area thereof.

According to the above-implemented configuration of the present disclosure, sparks generated from the battery cell 100 may be blocked by the blocking portion 220, whereas venting gas may be smoothly discharged over the blocking portion 220 to the venting unit 210. Therefore, in the event of an abnormality in the battery cell 100, the venting gas may be quickly discharged to the outside of the pack case 200 through the venting unit 210, thereby preventing the internal pressure of the pack case 200 from increasing and preventing additional chain reactions of ignition in other battery cells 100.

In particular, according to an embodiment of the present disclosure, as illustrated in FIG. 5, the blocking portion 220 may be configured to cover the upper portion of the venting unit 210. That is, as illustrated in FIG. 6, when the blocking portion 220 is viewed from the front, the blocking portion 220 may be configured to cover the upper portion of the venting unit 210. In this case, regardless of the gap between the blocking portion 220 and the venting unit 210, the length of the blocking portion 220 may be configured so as to cover the upper portion of the venting unit 210.

Specifically, venting gases or sparks emitted from the battery cell 100 may have high temperatures and a strong tendency to flow upward. Accordingly, when the blocking portion 220 is configured to cover the upper portion of the venting unit 210, as disclosed in the above embodiment, sparks having a strong tendency to move straight may be guided to collide with the blocking portion 220, thereby more reliably suppressing external discharge of the sparks. At the same time, venting gases may be smoothly discharged to the outside of the pack case 200 through the lower portion of the venting unit 210, which is not covered by the blocking portion 220 and exposed, due to internal pressure.

In addition, according to the above-implemented configuration of the present disclosure, in the event of a thermal runaway or other situation, if high-temperature gas is discharged to the outside of the pack case 200, the discharged gas may not be directed upward. In particular, in cases where occupants are positioned above the battery pack 10, such as in an electric vehicle, suppressing upward discharge of gas or flames may further enhance occupant safety. That is, according to the above-implemented configuration of the present disclosure, directional venting may be performed in the downward direction of the battery pack 10, thereby enhancing the safety of users positioned above, such as occupants.

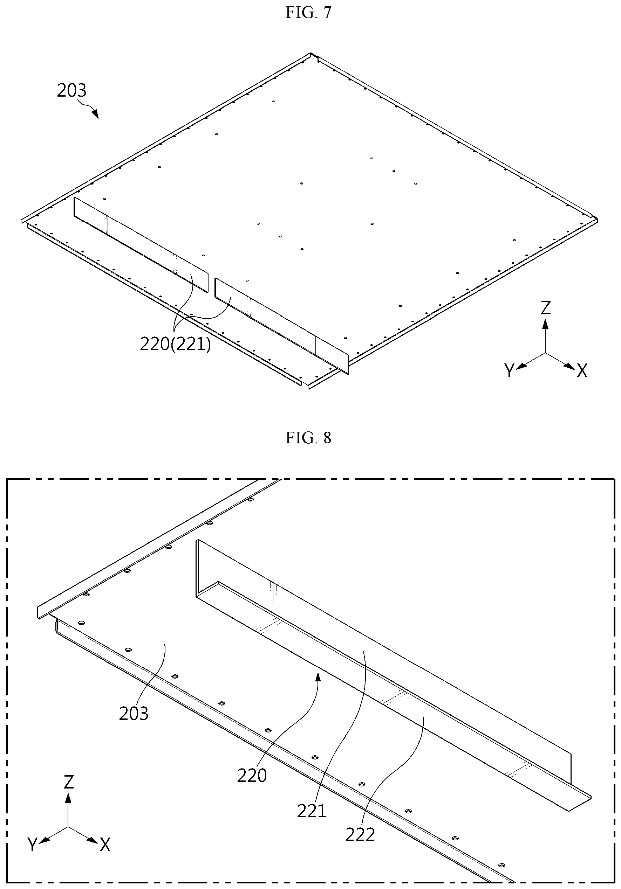

FIG. 7 is a bottom perspective view of a pack lid including a blocking portion in a battery pack according to an embodiment of the present disclosure. The shape and structure of a blocking portion 220 will be described in detail with reference to FIG. 7.

The blocking portion 220 may be formed in a plate shape. Since the blocking portion 220 is formed in a plate shape, it may be configured to face parallel to the venting unit 210 or the side frame 202.

According to the above-implemented configuration of the present disclosure, the blocking portion 220 may more easily block sparks directed toward the venting unit 210. In addition, according to the above-implemented configuration of the present disclosure, the volume and weight of the blocking portion 220 may be reduced, thereby improving the energy density of the battery pack 1.

More specifically, the blocking portion 220 may be configured to extend in one direction. The one direction may be the direction in which the venting units 210 are arranged. For example, as disclosed in the embodiment illustrated in FIG. 7, the blocking portion 220 may be configured to extend in the left-right direction (X-axis direction).

In addition, a plurality of blocking portions 220 may be provided. The plurality of blocking portions 220 may be arranged to be spaced apart from each other in one direction. For example, as disclosed in the embodiment illustrated in FIG. 7, the blocking portions 220 may be provided for every two venting units 210 and spaced apart from each other in the left-right direction (X-axis direction). The plurality of blocking portions 220 may be positioned symmetrically with respect to the center of the side frame 202.

The number and locations of the blocking portions 220 described with reference to the embodiment illustrated in FIG. 7 are merely examples, and may be changed to various other numbers and locations.

Referring to FIG. 7, the blocking portion 220 may include a main cover 221. The main cover 221 may be provided to face the venting unit 210. In addition, the main cover 221 may be configured in the form of a plate standing vertically and may be provided to face the side frame 202 in parallel.

FIG. 8 is a drawing illustrating a blocking portion included in a battery pack according to another embodiment of the present disclosure.

Referring to FIG. 8, a blocking portion 220 may include a lower cover 222. The lower cover 222 may be configured to extend to be bent inward from the lower surface of the main cover 221. That is, the lower cover 222 may be configured to be bent from the lower surface of the main cover 221 in a direction away from the venting unit 210. The lower cover 222 may be configured as a plate shape parallel to the base frame 201.

According to the above-implemented configuration of the present disclosure, sparks that collide with the main cover 221 and are reflected downward may be guided toward the inside of the pack case 200. Therefore, the sparks may be more reliably blocked from being redirected to the venting unit 210, thereby more effectively suppressing the sparks from being discharged outside the pack case 200.

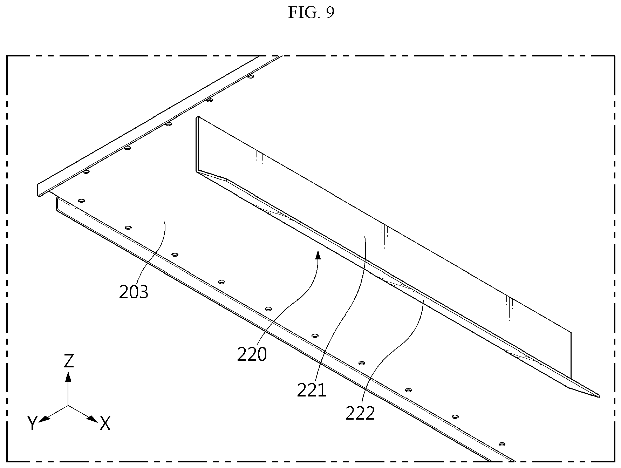

FIG. 9 is a drawing illustrating a blocking portion included in a battery pack according to another embodiment of the present disclosure.

Furthermore, the lower cover 222 may be configured in a diagonal shape. For example, as disclosed in the embodiment illustrated in FIG. 9, the lower cover 222 may be configured to be inclined downward. Specifically, the lower cover 222 may be configured to be bent inward (in the -Y-axis direction in FIG. 9) so as to become closer to the base frame 201. That is, the lower cover 222 may be configured to form an obtuse angle with the main cover 221.

According to the above-described embodiment of the present disclosure, sparks that collide with the main cover 221 and are reflected downward may be guided toward the inside of the pack case 200, while being prevented from heading toward the battery cells 100.

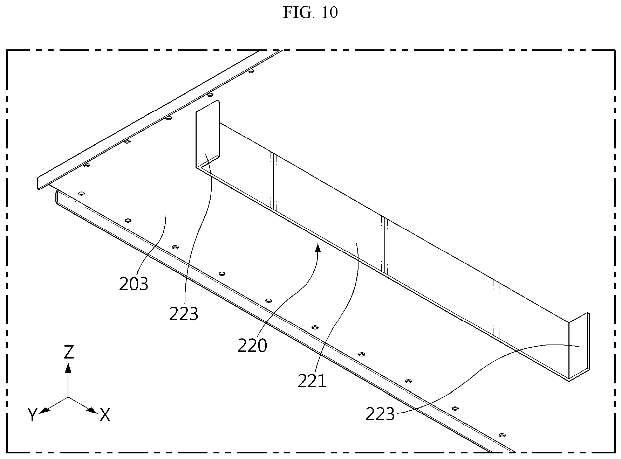

FIG. 10 is a drawing illustrating a blocking portion included in a battery pack according to another embodiment of the present disclosure.

Referring to FIG. 10, a blocking portion 220 may include a side cover 223. The side cover 223 may be configured to extend from at least one end of the main cover 221. The side cover 223 may extend to be bent from both ends of the main cover 221 in a direction away from the venting unit 210. For example, the side cover 223 may be configured to be bent inward (in the -Y-axis direction) from both left and right (X-axis direction) ends of the main cover 221.

The side cover 223 may be configured to face the side frame 202 where the venting unit 210 is not provided. The side cover 223 may be configured to be parallel to the side frame 202 or to be inclined so as to form an obtuse angle with the main cover 221.

In addition, the side cover 223 may be configured to guide sparks or the like, moving outward toward the venting unit 210 within the pack case 200, toward the inside of the pack case 200.

For example, in the embodiment shown in FIG. 10, the side cover 223 may be configured to deflect or change the flow direction of sparks moving in the X-axis direction toward the venting unit 210.

According to the above-described embodiment of the present disclosure, the blocking portion 220 may block sparks reflected from the main cover 221 from heading toward the side of the main cover 221. That is, according to the above-described embodiment of the present disclosure, the blocking portion 220 may more effectively block sparks or flames from being discharged to the outside of the pack case 200 by changing the flow direction of sparks, moving toward the venting unit 210 within the pack case 200, toward the inside of the pack case 200.

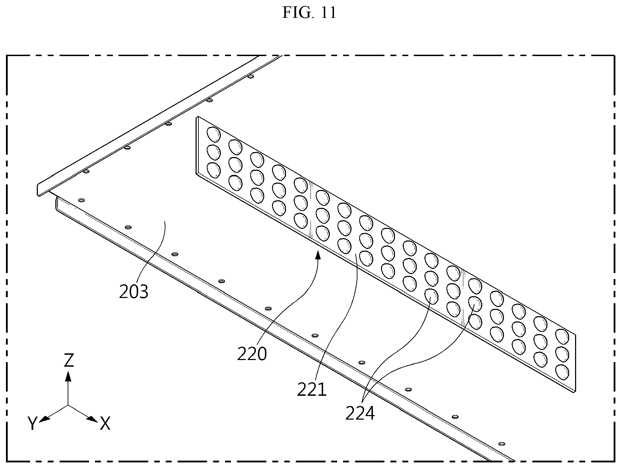

FIG. 11 is a drawing illustrating a blocking portion included in a battery pack according to another embodiment of the present disclosure.

As illustrated in FIG. 11, a blocking portion 220 may include a protrusion 224.

The protrusion 224 may be configured such that at least a portion of the main cover 221 protrudes. The protrusion 224 may be configured to protrude from the inner surface of the main cover 221 in a direction away from the venting unit 210, i.e., toward the inside of the pack case 200. For example, referring to the implemented configuration shown in FIG. 11, the protrusion 224 may protrude inward (in the -Y-axis direction) from the inner surface of the main cover 221.

In addition, a plurality of protrusions 224 may be provided. The plurality of protrusions 224 may be arranged to be spaced apart from each other in the horizontal and/or vertical directions.

According to the above-implemented configuration of the present disclosure, sparks and flames emitted from the battery cell 100 may be reflected by the protrusions 224, thereby further suppressing the flow of the sparks and flames having a strong tendency to move straight. In addition, in this case, particles such as sparks may be captured by recesses or the like formed between the protrusions 224. Therefore, sparks and flames may be more effectively prevented from being discharged outside the pack case 200.

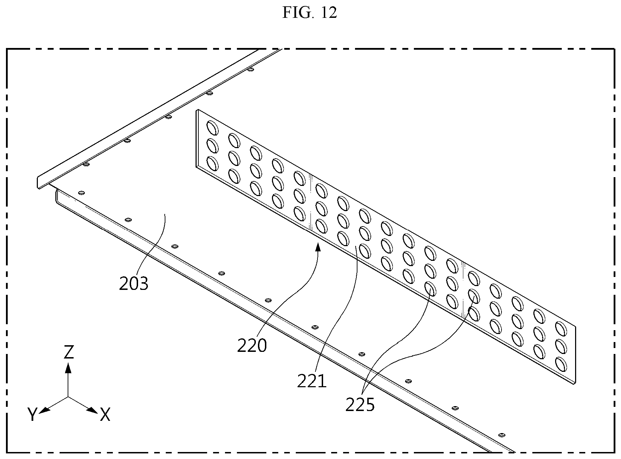

FIG. 12 is a drawing illustrating a blocking portion included in a battery pack according to another embodiment of the present disclosure.

A blocking portion 220 may be configured to allow venting gas emitted from the battery cell 100 to pass therethrough. For example, as illustrated in FIG. 12, the blocking portion 220 may include a through-hole 225. That is, the blocking portion 220 may be configured as a perforated plate or mesh.

The through-hole 225 may be formed in the main cover 221. The through-hole 225 may be formed by perforating at least a portion of the main cover 225. A plurality of through-holes 225 may be provided. The plurality of through-holes 225 may be densely formed in the main cover 220. In this case, the sizes of the plurality of through-holes 225 may all be the same, or may differ slightly.

According to the implemented configuration of the present disclosure, since the through-holes 225 are formed in the blocking portion 220, the venting gas generated when a thermal event occurs in the battery cell 100 may be distributed and discharged in multiple directions. If the venting gas is discharged in one direction at once, heat may be concentrated, which may lead to an explosion or fire. However, according to the above-implemented configuration of the present disclosure, such a phenomenon may be prevented.

In addition, according to the above-implemented configuration of the present disclosure, the blocking portion 220 may provide resistance to the flow of venting gas generated when a thermal event occurs in the battery cell 100, thereby reducing the flow rate of the venting gas.

Furthermore, according to the embodiment of the present disclosure, the blocking portion 220 may be configured to prevent flames or sparks emitted along with the venting gas from being discharged outside the blocking portion 220. In this case, the through-hole 225 may be preferably limited to a size capable of preventing flames or sparks generated in the battery cell 100 from being exposed to the outside through the through-hole 225.

That is, according to an implemented configuration of the present disclosure, sparks generated in the battery cell 100 may be blocked by the blocking portion 220, whereas venting gas may be smoothly discharged through the through-hole 225. Accordingly, when an abnormal situation occurs in the battery cell 100, the venting gas may be quickly discharged to the outside of the pack case 200, thereby preventing the internal pressure inside the pack case 200 from increasing, and preventing additional chain reactions of ignition in other battery cells 100.

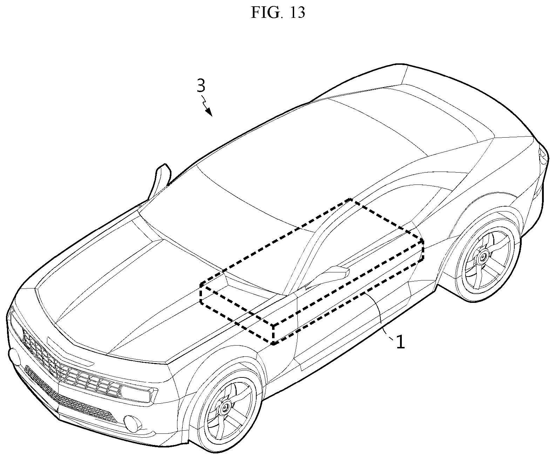

FIG. 13 is a schematic perspective view of a vehicle including a battery pack according to an embodiment of the present disclosure.

Referring to FIG. 13, a vehicle 3 according to an embodiment of the present disclosure may include one or more battery packs 1 according to the aforementioned embodiments. The vehicle 3 according to the present disclosure may be, for example, an electric vehicle, a hybrid vehicle, or a plug-in hybrid vehicle. The vehicle 3 includes a fourwheel vehicle and a two-wheel vehicle. The vehicle 3 may operate by receiving power from a battery pack 1 or battery module 10 according to an embodiment of the present disclosure.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

## Claims

1. A battery pack comprising:
a plurality of battery cells; and
a pack case configured to accommodate the plurality of battery cells, and having a venting unit configured to discharge gases generated from the battery cell to an outside, and a blocking portion protruding inward from an inner surface thereof so as to prevent sparks discharged from the battery cell from moving toward the venting unit.

2. The battery pack of claim 1,
wherein the blocking portion is provided between the plurality of battery cells and the venting unit.

3. The battery pack of claim 1,
wherein the pack case comprises
a base frame on which the plurality of battery cells are seated, and
a side frame extending upward from the base frame and having the venting unit provided thereon, and
wherein the blocking portion is configured to face the side frame on which the venting unit is provided.

4. The battery pack of claim 1,
wherein the pack case comprises
a pack lid configured to cover a top of the plurality of battery cells and having the blocking portion formed on an inner surface thereof.

5. The battery pack of claim 1,
further comprising a module case configured to accommodate the plurality of battery cells in an inner space and having a venting hole formed on an upper surface to communicate with the inner space.

6. The battery pack of claim 1,
wherein the blocking portion is configured to cover an upper portion of the venting unit.

7. The battery pack of claim 1,
wherein the blocking portion is configured to extend in one direction.

8. The battery pack of claim 1,
wherein a plurality of blocking portions are arranged to be spaced apart from each other in one direction.

9. The battery pack of claim 1,
wherein the blocking portion comprises
a main cover configured to face the venting unit.

10. The battery pack of claim 9,
wherein the blocking portion comprises
a lower cover configured to be bent from a lower end of the main cover in a direction away from the venting unit.

11. The battery pack of claim 10,
wherein the lower cover is configured to be inclined downward.

12. The battery pack of claim 9,
wherein the blocking portion comprises
a side cover configured to be bent from both ends of the main cover in a direction away from the venting unit.

13. The battery pack of claim 9,
wherein the blocking portion comprises
a protrusion configured such that at least a portion of the main cover protrudes in a direction away from the venting unit.

14. The battery pack of claim 9,
wherein the blocking portion has
a plurality of through-holes formed by perforating at least a portion of the main cover.

15. A vehicle comprising a battery pack according to any one of claims 1 to 14.
